# EUROPÄISCHE PATENTSCHRIFT

(11) **EP 1 600 742 B1**
(45) Veröffentlichungstag und Bekanntmachung des Hinweises auf die Patenterteilung: **08.04.2009**
(21) Anmeldenummer: 05009675.9
(22) Anmeldetag: 03.05.2005
(51) Int. Cl.: G01D 3/028, G01L 19/00, G01L 19/06

(54) **Sensoranordnung mit thermischer Entkopplung des Sensors vom sensierten Medium**
Sensor arrangement with thermal decoupling of the sensor from the sensed medium
Dispositif de mesure avec découplage thermique du capteur par rapport au milieu mesuré

(30) Priorität: 11.05.2004 DE 102004023744
(43) Veröffentlichungstag der Anmeldung: 30.11.2005
(73) Patentinhaber: Behr GmbH & Co. KG, 70469 Stuttgart (DE)
(72) Erfinder: Rais, Thomas Dr. rer. nat., 71672 Marbach/Neckar (DE)

(56) Entgegenhaltungen:
- EP-A- 0 251 592
- EP-A- 1 255 099
- WO-A-03/058186
- DE-A1- 19 952 106
- DE-C1- 4 025 664

## Beschreibung

Die Erfindung betrifft eine Sensoranordnung gemäß dem Oberbegriff des Anspruchs 1.

Zur Überwachung, Steuerung und Regelung von Systemen, die mit hohen Temperaturen von Medien und Medienströmen arbeiten, wie beispielsweise Hydraulik-, Kühlmittel-, Kältemittel-, Abgas- oder Schmierungssysteme, ist es erforderlich, dass die Zustandsparameter des Mediums, das heißt insbesondere der Druck, mit einer entsprechenden Sensorik erfasst und entsprechend den Erfordernissen weiter verarbeitet werden können. Dabei treten bei Temperaturen ab ca. 125°C Probleme auf, da marktübliche Drucksensoren, insbesondere Drucksensoren mit einer integrierten Auswertungselektronik auf Grund des zumindest zeitweisen Überschreitens der zulässigen Betriebstemperaturen, die in der Regel zwischen 125 und 140°C liegen, nicht mehr verwendet werden können. Bei Betriebstemperaturen ab ca. 125°C müssen daher in aller Regel spezielle hochtemperaturfähige und daher teure Drucksensoren verwendet werden, welche hochtemperaturfähige elektronische Komponenten aufweisen.

Aus der DE 199 52 106 A1 ist eine Sensoranordnung mit einem Zuführungsteil aus Edelstahl bekannt, wobei das Zuführungsteil einen Kanal für ein entsprechendes Druckmedium aufweist. Auf dem Zuführungsteil ist eine Messzelle als Druckmesszelle aus Edelstahl aufgebracht, wobei an dieser Messzelle eine Messmembrane zur Bestimmung des Druckes eines Mediums vorgesehen ist.

Es ist Aufgabe der Erfindung, eine verbesserte, insbesondere kostengünstigere Sensoranordnung zur Verfügung zu stellen.

Diese Aufgabe wird gelöst durch eine Sensoranordnung mit den Merkmalen des Anspruchs 1. Vorteilhafte Ausgestaltungen sind Gegenstand der Unteransprüche.

Erfindungsgemäß ist eine Sensoranordnung mit mindestens einem Sensor vorgesehen, der einen Zustandsparameter eines Mediums ermittelt, das sich in einem Behälter oder in einer Leitung befindet oder strömt, wobei im Behälter beziehungsweise in der Leitung eine Medien-Anbindungsstelle vorgesehen ist, durch welche das Medium einem Messelement an der Messstelle des Sensors zuführbar ist, und das Messelement, insbesondere der Sensor thermisch vom Medium entkoppelt ist, wobei die Messstelle und somit das Messelement, insbesondere der Sensor räumlich von der Medien-Anbindungsstelle beabstandet ist. Durch die thermische Entkoppelung ist an der Messstelle bei im Wesentlichen gleichem Druck eine deutlich niedrigere Medientemperatur möglich, so dass herkömmliche, kostengünstige Sensoren, die nicht für hohe Medientemperaturen ausgelegt sind, verwendet werden können. Zudem nimmt die Messgenauigkeit bei herkömmlichen Sensoren mit steigender Temperatur ab, so dass sich in der Regel die durch die thermische Entkopplung reduzierte Medientemperatur vorteilhaft auf die Messgenauigkeit auswirkt.

Bevorzugt weist die Sensoranordnung als Sensor einen Drucksensor auf, welcher den Mediendruck sowie dessen dynamische Änderungen im Bereich der Medien-Anbindungsstelle misst.

Bevorzugt wird der Grad der thermischen Entkopplung so ausgelegt, dass die Differenz der Medientemperatur zwischen Medien-Anbindungsstelle und Messstelle auch bei den höchsten im Normalbetrieb zu erwartenden Medien-und Umgebungstemperaturen betragsmäßig mindestens so groß ist, wie die Temperaturdifferenz zwischen der maximalen Betriebstemperatur des Mediums an der Anbindungsstelle und der maximalen zulässigen Betriebstemperatur der Medienseite des Sensors.

Das Medium steht über ein mit dem Medium gefülltes Rohr, eine Bohrung oder einen sonstigen Durchgang in direkter Verbindung mit dem Sensor. Dabei bildet sich jedoch im Durchgang keine oder nur eine minimale Strömung aus, so dass die Wärmeleitung nicht durch eine Strömung des Mediums unterstützt wird.

Das Rohr oder das Element, in der sich die Bohrung oder der Durchgang befindet, wird bevorzugt von Umgebungsluft und/oder einem Kühlmedium gekühlt, so dass die gewünschte thermische Entkopplung und die hiermit in Zusammenhang stehende Temperaturdifferenz innerhalb der spezifizerten Betriebsbedingungen gewährleistet werden kann.

Der Durchgang zwischen der Medien-Anbindungsstelle und der Messstelle weist bei R744 als Medium einen Innendurchmesser von weniger als 2 mm, insbesondere 0,4 bis 1,2 mm auf.

Als Medien kommen insbesondere Luft, Abgase, Kältemittel, Kühlmittel sowie Hydraulik- oder Schmieröle, gegebenenfalls auch mit kleineren Beimischungen anderer Stoffe, in Frage.

Zur Verbesserung des Wärmeübergangs zwischen dem Rohr oder dem Element, in der sich die Bohrung oder der Durchgang befindet, und der kühleren Umgebung (z.B. Umgebungsluft oder Kühlmedium) weist die Sensoranordnung bevorzugt Rippen auf, wobei die Rippen außenseitig oder innenseitig angeordnet sein können.

Weiterhin können zumindest in einem wesentlichen Teilbereich zwischen der Messstelle und der Medien-Anbindungsstelle als Materialien bevorzugt schlecht wärmeleitfähige Materialien, wie insbesondere Edelstahl, vorgesehen, wodurch die Wärmeeinleitung von der Anbindungsstelle entlang der Sensoranordnung verringert wird, so dass sich am Sensorelement eine niedrigere Temperatur einstellt.

Vorzugsweise besteht zumindest in einem wesentlichen Teilbereich zwischen der Messstelle und der Medien-Anbindungsstelle eine Verbindung, insbesondere in Form einer einteiligen Ausgestaltung, zu einem anderen, kühleren Bauteil, an welches Wärme abgegeben wird. Dabei kann das Bauteil von einem zweiten, kühleren Medium durchströmt werden.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung einer Sensoranordnung gemäß dem ersten Ausführungsbeispiel,
- Fig. 2: eine schematische Darstellung einer Sensoranordnung gemäß dem zweiten Ausführungsbeispiel,
- Fig. 3: eine schematische Darstellung einer Sensoranordnung gemäß dem dritten Ausführungsbeispiel,
- Fig. 4: eine schematische Darstellung einer Sensoranordnung gemäß dem vierten Ausführungsbeispiel, und
- Fig. 5: eine schematische Darstellung einer Sensoranordnung gemäß dem fünften Ausführungsbeispiel.

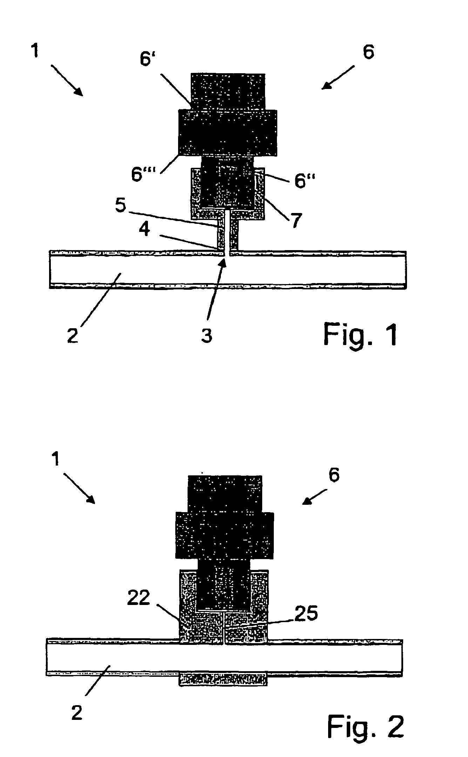

Gemäß dem in Fig. 1 dargestellten ersten Ausführungsbeispiel ist eine Sensoranordnung 1 vorgesehen, welche der Messung des Druckes (statische und dynamische Änderungen) von R744 dient, welches in einem Kältemittel-Kreislauf einer Klimaanlage zirkuliert, von dem nur ein Teil einer Leitung 2 dargestellt ist. Die Leitung 2 weist als Medien-Anbindungsstelle 3 eine Bohrung 4 auf, welche über ein Rohr 5, das an seinem der Medien-Anbindungsstelle 3 gegenüberliegenden Ende erweitert ausgebildet ist, mit einem im erweiterten Ende des Rohres 5 angeordneten Sensor 6, vorliegend einem Drucksensor 6', verbunden ist, welcher an der Messstelle 7 angeordnet ist.

Der Drucksensor 6', bestehend aus dem Messelement 6" und einem Gehäuse 6"', welche die Elektronik enthält, ist mittels eines Gewindes im eine Art Sockel bildenden Ende des Rohres 5 befestigt, wobei eine in der Zeichnung nicht dargestellte Abdichtung auf an sich bekannte Weise sicherstellt, dass das Medium, das an der Medien-Anbindungsstelle 3 und auf Grund der Geometrie des Rohres 5 im Wesentlichen auch an der Messstelle 7 einen Druck von bis zu 140 bar aufweisen kann, nicht an die Umgebung abgegeben werden kann. Der Innendurchmesser des Rohres 5 beträgt vorliegend weniger als 2 mm und stellt sicher, dass der Gesamtdruck, das heißt sowohl der statische Druck als auch dessen dynamische Änderungen, in der Leitung 2 an der Medien-Anbindungsstelle 3 im Wesentlichen unverfälscht an der Messstelle 7 gemessen werden kann.

Um sicherzustellen, dass die Temperatur an der Messstelle 7 die maximal zulässige Betriebstemperatur des Drucksensors 6' nicht überschreitet, die Temperaturdifferenz zwischen Medien-Anbindungsstelle 3 und Messstelle 7 auch bei ungünstigen, das heißt den höchsten bei normalem Dauerbetrieb zu erwartenden Medien- und Umgebungstemperaturen im Bereich Messstelle 7 und Medien-Anbindungsstelle 3, betragsmäßig mindestens so groß wie die Temperaturdifferenz zwischen maximaler Betriebstemperatur des Mediums und zulässiger maximaler Betriebstemperatur des Drucksensors 6', wobei die entsprechende Wärmemenge vorliegend nach außen an die Umgebung abgeführt wird.

Das in Fig. 2 dargestellte zweite Ausführungsbeispiel entspricht im Wesentlichen dem zuvor beschriebenen ersten Ausführungsbeispiel, so dass im Folgenden nur auf die Unterschiede eingegangen wird. Im Unterschied zum ersten Ausführungsbeispiel ist an Stelle eines Rohres ein Bereich der Leitung 2 einstückig mit einem einen Sockel bildenden Block 22 für den Sensor 6 ausgebildet, wobei in diesem massiven Block 22 zwei Bohrungen vorgesehen sind. Eine erste Bohrung weist einen dem Innendurchmesser der Leitung 2 entsprechenden Innendurchmesser auf, so dass der Strömungsverlauf nicht durch den Übergang von der Leitung 2 zum Block 22 und den Übergang vom Block 22 zur Leitung 2 gestört wird. Eine zweite Bohrung 25 mit erheblich kleinerem Durchmesser ersetzt das Rohr 5 und endet in einem Bereich mit erweitertem Durchmesser, welcher, entsprechend dem erweiterten Ende des Rohres 5, ein Innengewinde aufweist, in welches der Sensor 6 geschraubt ist. Die Auslegung in Hinblick auf die Wärmeabgabe entspricht der des ersten Ausführungsbeispiels, wobei das System auf Grund des grö-ßeren Volumens des Blocks 22 thermisch träger ist, so dass im Medium an der Anbindungsstelle kurzzeitig auftretende Temperaturspitzen durch diesen Aufbau in ihrer Amplitude gedämpft an der Messstelle ankommen.

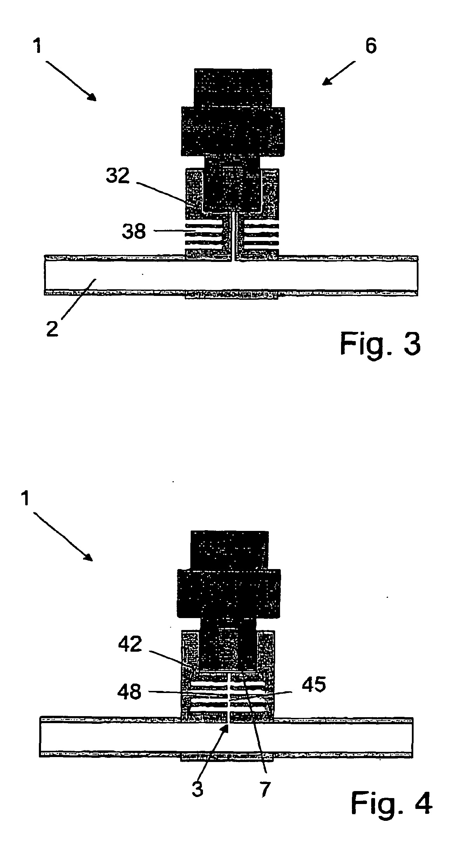

Das in Fig. 3 dargestellte dritte Ausführungsbeispiel entspricht im Wesentlichen dem zuvor beschriebenen zweiten Ausführungsbeispiel, so dass auch in diesem Fall im Folgenden nur auf die Unterschiede eingegangen wird. Im Unterschied zum zweiten Ausführungsbeispiel ist der massive Block 32 auf seiner Außenseite mit einer Mehrzahl von Rippen 38 versehen, welche seine Außenfläche und somit die Wärmeabgabefläche an die Umgebung deutlich vergrößern, so dass eine größere Temperaturdifferenz des Mediums zwischen Medien-Anbindungsstelle 3 und Messstelle 7 bei kurzer Distanz erreicht werden kann.

Beim vierten, in Fig. 4 dargestellten Ausführungsbeispiel, das im Wesentlichen dem zuvor beschriebenen dritten Ausführungsbeispiel entspricht, sind die Rippen 48 im Inneren des Blocks 42 vorgesehen und verbessern daher die Wärmeabgabe des Mediums an den Block 42. Die Rippen erstrecken sich in radialer Richtung um die zweite Bohrung 45 zwischen Medien-Anbindungsstelle 3 und Messstelle 7.

Natürlich können auch die außenliegenden Rippen 38 und die innenliegenden Rippen 48 miteinander kombiniert werden, so dass der Wärmeübergangs vom Medium zum Block und vom Block an die Umgebung verbessert werden kann.

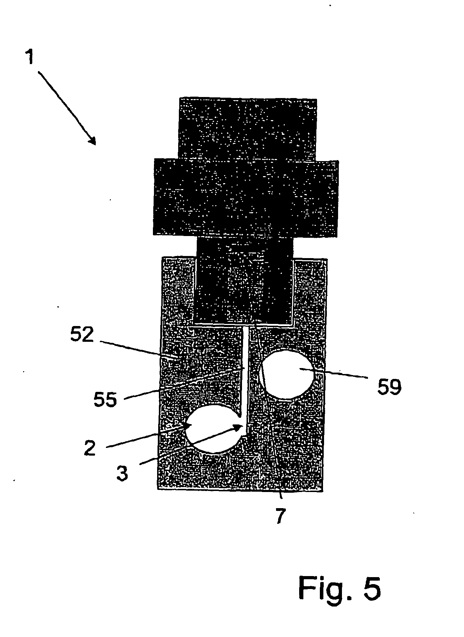

Gemäß dem fünften, in Fig. 5 dargestellten Ausführungsbeispiel ist in dem Bereich der Leitung, in welchem die Medien-Anbindungsstelle 3 vorgesehen ist, wiederum ein massiver Block 52 mit einer ersten Bohrung, durch welche das Medium strömt, und einer zweiten Bohrung 55, welche die Verbindung von Medienstrom zur Messstelle 7 bildet, eine parallel zur ersten Bohrung verlaufende dritte Bohrung vorgesehen, welche eine Kühlleitung 59 bildet, die von einem Kühlmedium durchströmt wird, das identisch mit dem Messmedium ist. Altemativ kann auch ein anderes Medium verwendet werden. Dabei ist die Kühlleitung 59 möglichst dicht an der zweiten Bohrung zwischen Medien-Anbindungsstelle 3 und Messstelle 7 angeordnet. Um eine möglichst effiziente Wärmeabfuhr im Bereich der Messstelle zu erreichen, wird die Bohrung der Kühlleitung 59 bevorzugt dicht bei der Einschraubstelle des Sensors 6 geführt.

Der Block 52 bildet gemäß dem vorliegenden Ausführungsbeispiel im Bereich seiner dritten Bohrung gleichzeitig auch den "kalten" Anschluss eines Wärmetauschers, vorliegend eines Kältemittelwärmetauschers einer Kraftfahrzeug-Klimaanlage.

Entsprechend ist auch eine Anbindung an einen Anschluss eines Wärmetauschers oder eine sonstige Leitung möglich, sofern die erforderliche Temperaturdifferenz gewährleistet werden kann, ohne den sonstigen Betrieb durch den zusätzlichen Wärmeeintrag zu beeinträchtigen.

Zur Unterstützung der Wärmeabgabe an die Umgebung kann die gesamte Anordnung an einer Stelle vorgesehen sein, in welcher betriebsbedingt eine gewisse Luftzirkulation gegeben ist, beispielsweise auf Grund eines Gebläses.

### Bezugszeichenliste

- 1: Sensoranordnung
- 2: Leitung
- 3: Medien-Anbindungsstelle
- 4: Bohrung
- 5: Rohr
- 6: Sensor
- 6': Drucksensor
- 6": Messelement
- 6'": Gehäuse
- 7: Messstelle
- 22, 32, 42, 52: Block
- 25, 45, 55: Bohrung
- 38, 48: Rippe
- 59: Kühlleitung

## Patentansprüche

1. Sensoranordnung mit mindestens einem Sensor (6), der einen Zustandsparameter eines Mediums ermittelt, das sich in einem Behälter befindet oder sich in einer Leitung (2) befindet oder strömt, wobei im Behälter beziehungsweise in der Leitung (2) eine Medien-Anbindungsstelle (3) vorhanden ist, durch welche das Medium einem Messelement (6") an der Messstelle (7) des Sensors (6) zuführbar ist, wobei das Messelement (6"), insbesondere der Sensor (6) thermisch vom im Behälter oder in der Leitung befindlichen Medium entkoppelt ist, wobei die Messstelle (7) und somit auch das Messelement (6"), insbesondere der Sensor (6) räumlich von der Medien-Anbindungsstelle (3) beabstandet ist und das Medium über ein mit dem Medium gefülltes Rohr (5) oder einer Bohrung (25; 45; 55) in direkter Verbindung mit dem Sensor (6) ist, **dadurch gekennzeichnet, dass** das Rohr (5) beziehungsweise die Bohrung (25; 45; 55) einen Innendurchmesser von weniger als 2 mm aufweist.

2. Sensoranordnung nach Anspruch 1, **dadurch gekennzeichnet, dass** die Sensoranordnung (1) einen Drucksensor (6') aufweist.

3. Sensoranordnung nach einem der vorhergehenden Ansprüche, **dadurch gekennzeichnet, dass** bei, unter normalen Betriebsbedingungen auftretenden maximalen Medientemperaturen die Temperaturdifferenz zwischen Medien-Anbindungsstelle (3) und Messstelle (7) auch bei den höchsten bei normalem Dauerbetrieb zu erwartenden Umgebungstemperaturen im Bereich von Messstelle (7) und Medien-Anbindungsstelle (3) betragsmäßig mindestens so groß wie die Temperaturdifferenz zwischen maximaler Betriebstemperatur des Mediums an der Anbindungsstelle (3) und maximal zulässiger Betriebstemperatur der Medienseite des Sensors (6) ist.

4. Sensoranordnung nach einem der vorhergehenden Ansprüche, **dadurch gekennzeichnet, dass** das Rohr (5) oder das Element, in der sich die Bohrung (25; 45; 55) befindet, von Umgebungsluft und/oder einem Kühlmedium gekühlt ist.

5. Sensoranordnung nach einem der vorhergehenden Ansprüche, **dadurch gekennzeichnet, dass** das Rohr (5) beziehungsweise die Bohrung (25; 45; 55) insbesondere bei R744 als Medium einen Innendurchmesser von 0,4 bis 1,2 mm aufweist.

6. Sensoranordnung nach einem der vorhergehenden Ansprüche, **dadurch gekennzeichnet, dass** das Medium einen statischen Druck von maximal 200 bar aufweist.

7. Sensoranordnung nach einem der vorhergehenden Ansprüche, **dadurch gekennzeichnet, dass** das Medium durch Luft, Abgase, Kältemittel, Kühlmittel sowie Hydraulik- oder Schmieröle, gegebenenfalls auch mit kleineren Beimischungen anderer Stoffe, ist.

8. Sensoranordnung nach einem der vorhergehenden Ansprüche, **dadurch gekennzeichnet, dass** die Sensoranordnung (1) Rippen (38; 48) aufweist.

9. Sensoranordnung nach Anspruch 8, **dadurch gekennzeichnet, dass** die Rippen (38; 48) zwischen dem Sensor (6) und dem Behälter beziehungsweise der Leitung (2) angeordnet sind.

10. Sensoranordnung nach Anspruch 9, **dadurch gekennzeichnet, dass** die Rippen (48) im Innenraum der Verbindung zwischen Behälter beziehungsweise Leitung und der Messstelle (7) angeordnet sind, wobei die Zwischenräume zwischen den Rippen (48) vom Medium gefüllt sind.

11. Sensoranordnung nach Anspruch 9 oder 10, **dadurch gekennzeichnet, dass** die Rippen (38) an der Außenfläche der Verbindung zwischen Behälter beziehungsweise Leitung (2) und der Messstelle (7) angeordnet sind.

12. Sensoranordnung nach einem der vorhergehenden Ansprüche, **dadurch gekennzeichnet, dass** zumindest in einem wesentlichen Teilbereich zwischen der Messstelle (7) und der Medien-Anbindungsstelle (3) als Materialien schlecht wärmeleitfähige Materialien, wie insbesondere Edelstahl, vorgesehen sind.

13. Sensoranordnung nach einem der vorhergehenden Ansprüche, **dadurch gekennzeichnet, dass** zumindest in einem wesentlichen Teilbereich zwischen der Messstelle (7) und der Medien-Anbindungsstelle (3) eine Verbindung zu einem anderen, kühleren Bauteil besteht, an welches Wärme abgegeben wird.

14. Sensoranordnung nach Anspruch 13, **dadurch gekennzeichnet, dass** in einem Bauteil, welches das Medium durchströmt, die Medien-Anbindungsstelle (3) und die Messstelle (7) angeordnet ist, wobei noch ein zweites Medium das Bauteil durchströmt, welches zumindest im Normalbetrieb eine geringere Temperatur als das erste Medium aufweist.

## Claims

1. Sensor arrangement with at least one sensor (6) detecting a state parameter of a medium placed or flowing in a container or in a line (2), wherein a medium connection point (3) through which the medium can be fed to a measuring element (6") at the measuring point (7) of the sensor (6) is present in the container or in the line (2) respectively, wherein the measuring element (6"), in particular the sensor (6), is thermally decoupled from the medium in the container or in the line, wherein the measuring point (7) and thus the measuring element (6"), in particular the sensor (6), are placed at a distance from the medium connection point (3) and the medium is in direct connection with the sensor (6) via a tube (5) filled with medium or a bore (25; 45; 55), **characterised in that** the tube (5) or the bore (25; 45; 55) has an internal diameter of less than 2 mm.

2. Sensor arrangement according to claim 1, **characterised in that** the sensor arrangement (1) comprises a pressure sensor (6').

3. Sensor arrangement according to any of the preceding claims, **characterised in that**, at maximum medium temperatures occurring in normal operating conditions, the temperature differential between the medium connection point (3) and the measuring point (7) is at least as great as the temperature differential between the maximum operating temperature of the medium at the connection point (3) and the maximum permitted operating temperature of the medium side of the sensor (6) even at the highest ambient temperatures to be expected in normal continuous operation in the region of the measuring point (7) and of the medium connection point (3).

4. Sensor arrangement according to any of the preceding claims, **characterised in that** the tube (5) or the element which houses the bore (25; 45; 55) is cooled by ambient air and/or by a coolant.

5. Sensor arrangement according to any of the preceding claims, **characterised in that** the tube (5) or the bore (25; 45; 55) has an internal diameter of 0.4 to 1.2 mm, in particular if R744 is used as a medium.

6. Sensor arrangement according to any of the preceding claims, **characterised in that** the medium has a maximum static pressure of 200 bar.

7. Sensor arrangement according to any of the preceding claims, **characterised in that** the medium is represented by air, exhaust gases, refrigerant, coolant or hydraulic or lubricating oil, with minor additions of other substances if required.

8. Sensor arrangement according to any of the preceding claims, **characterised in that** the sensor arrangement (1) is provided with fins (38; 48).

9. Sensor arrangement according to claim 8, **characterised in that** the fins (38; 48) are disposed between the sensor (6) and the container or the line (2).

10. Sensor arrangement according to claim 9, **characterised in that** the fins (48) are located in the interior of the connection between the container or the line and the measuring point (7), the spaces between the fins (48) being filled with medium.

11. Sensor arrangement according to claim 9 or 10, **characterised in that** the fins (38) are located on the external surface of the connection between the container or the line and the measuring point (7).

12. Sensor arrangement according to any of the preceding claims, **characterised in that** materials with poor thermal conductivity, such as stainless steel, are provided at least in a substantial section between the measuring point (7) and the medium connection point (3).

13. Sensor arrangement according to any of the preceding claims, **characterised in that** there is a connection to another, cooler component to which heat is emitted at least in a substantial section between the measuring point (7) and the medium connection point (3).

14. Sensor arrangement according to claim 13, **characterised in that** the medium connection point (3) and the measuring point (7) are provided in a component through which the medium flows, wherein a second medium, which has a lower temperature than the first medium at least in normal operation, also flows through the component.

## Revendications

1. Agencement de capteurs comprenant au moins un capteur (6) qui détermine un paramètre d'état d'un milieu qui se trouve dans un récipient ou bien se trouve ou s'écoule dans une conduite (2), où il existe, dans le récipient ou dans la conduite (2), un point d'entrée (3) du milieu par lequel le milieu peut être fourni à un élément de mesure (6"), au niveau du point de mesure (7) du capteur (6), où l'élément de mesure (6"), en particulier le capteur (6), est découplé thermiquement du milieu se trouvant dans le récipient ou dans la conduite, où le point de mesure (7) et par conséquent, aussi, l'élément de mesure (6"), en particulier le capteur (6), sont espacés physiquement du point d'entrée (3) du milieu, et le milieu est en communication directe avec le capteur (6), par un tube (5) rempli avec le milieu ou bien par un perçage (25 ; 45 ; 55),
**caractérisé en ce que** le tube (5) ou le perçage (25 ; 45 ; 55) présente un diamètre intérieur inférieur à 2 mm.

2. Agencement de capteurs selon la revendication 1, **caractérisé en ce que** l'agencement de capteurs (1) présente un capteur de pression (6').

3. Agencement de capteurs selon l'une ou l'autre des revendications précédentes, **caractérisé en ce que**, dans le cas de températures maximales concernant le milieu et se produisant dans des conditions normales de fonctionnement, la différence de température existant entre le point d'entrée (3) du milieu et le point de mesure (7), également dans le cas des températures ambiantes les plus élevées attendues au cours d'un fonctionnement permanent normal, est, dans la zone du point de mesure (7) et du point d'entrée (3) du milieu, en valeur, au moins aussi importante que la différence de température existant entre la température de fonctionnement maximale du milieu, au niveau du point d'entrée (3), et la température de fonctionnement maximale admissible, côté milieu du capteur (6).

4. Agencement de capteurs selon l'une quelconque des revendications précédentes, **caractérisé en ce que** le tube (5) ou l'élément dans lequel se trouve le perçage (25 ; 45 ; 55) est refroidi par de l'air ambiant et / ou par un milieu de refroidissement.

5. Agencement de capteurs selon l'une quelconque des revendications précédentes, **caractérisé en ce que** le tube (5) ou le perçage (25 ; 45 ; 55), en particulier dans le cas du fluide frigorigène R744 servant de milieu, présente un diamètre intérieur compris entre 0,4 mm et 1, 2 mm.

6. Agencement de capteurs selon l'une quelconque des revendications précédentes, **caractérisé en ce que** le milieu présente une pression statique de 200 bars maximum.

7. Agencement de capteurs selon l'une quelconque des revendications précédentes, **caractérisé en ce que** le milieu est constitué par de l'air, des gaz d'échappement, un fluide frigorigène, un liquide de refroidissement ainsi que par des huiles hydrauliques ou des huiles de lubrification, le cas échéant, aussi, avec de faibles ajouts d'autres substances.

8. Agencement de capteurs selon l'une quelconque des revendications précédentes, **caractérisé en ce que** l'agencement de capteurs (1) présente des ailettes (38 ; 48).

9. Agencement de capteurs selon la revendication 8, **caractérisé en ce que** les ailettes (38 ; 48) sont disposées entre le capteur (6) et le récipient ou la conduite (2).

10. Agencement de capteurs selon la revendication 9, **caractérisé en ce que** les ailettes (48) sont disposées, dans l'espace intérieur de l'assemblage, entre le récipient ou la conduite, et le point de mesure (7), où les espaces intermédiaires formés entre les ailettes (48) sont remplis par le milieu.

11. Agencement de capteurs selon la revendication 9 ou 10, **caractérisé en ce que** les ailettes (38) sont disposées, sur la surface extérieure de l'assemblage, entre le récipient ou la conduite (2), et le point de mesure (7).

12. Agencement de capteurs selon l'une quelconque des revendications précédentes, **caractérisé en ce qu'**il est prévu, comme matériau, au moins dans une importante zone partielle comprise entre le point de mesure (7) et le point d'entrée (3) du milieu, des matériaux à mauvaise conductibilité thermique, comme en particulier un acier spécial.

13. Agencement de capteurs selon l'une quelconque des revendications précédentes, **caractérisé en ce qu'**il existe, au moins dans une importante zone partielle comprise entre le point de mesure (7) et le point d'entrée (3) du milieu, une liaison à un autre composant plus froid au niveau duquel de la chaleur se dissipe.

14. Agencement de capteurs selon la revendication 13, **caractérisé en ce que** le point d'entrée (3) du milieu et le point de mesure (7) sont disposés dans un composant que traverse le milieu, où un deuxième milieu traverse aussi le composant, deuxième milieu qui, au moins au cours du fonctionnement normal, présente une température inférieure à celle du premier milieu.
